Europäisches Patentamt

European Patent Office

Office européen des brevets

(11) Veröffentlichungsnummer: **0 315 723**
**A1**

(12) **EUROPÄISCHE PATENTANMELDUNG**

(21) Anmeldenummer: **87810656.6**

(22) Anmeldetag: **12.11.87**

(51) Int. Cl.⁴: **F16L 23/02**

(43) Veröffentlichungstag der Anmeldung:
**17.05.89 Patentblatt 89/20**

(84) Benannte Vertragsstaaten:
**AT BE CH DE ES FR GB GR IT LI LU NL SE**

(71) Anmelder: **Kübler, Robert**
**Bahnhofstrasse 261**
**CH-8623 Wetzikon(CH)**

(72) Erfinder: **Kübler, Robert**
**Bahnhofstrasse 261**
**CH-8623 Wetzikon(CH)**

(54) **Gegossene Vorschweiss- und Losflansche, aus Stahl sowie aus Aluminium, mit Aufhängeösen, Anschweisslaschen und Aussparungen für Vorschweissbordscheiben, in neuer Form.**

(57) Bei den in der Kokille gegossenen Alu-Losflanschen sind folgende Merkmale angebracht:
Reduzierte Aussenkontur (1)
Aussparungen zwischen den Verbindungslöchern, durch Verrippungen verstärkt (2)
Angegossenen Aufhängeösen (3)
Eingegosse Aussparung für Vorschweissbordscheiben (7,8,9)
Die im Feingussverfahren hergestellten Stahl-Losflansche bieten zusätzlich:
Die obere Abschlusskante der Aufhängeöse (3) ist als Schweisskante geformt (4) zum Anschweissen einer Lasche (6)
Durchgangs- und Gewindelöcher abwechselnd (10,11,12,13,14)
Bei den Vorschweissflanschen gelten die oben angeführten Merkmale mit Ausnahme der Aussparung für Bordscheiben, welche entfällt. Die Dichtfläcer ist feinstgedreht und mit einer PFTE Beschichtung versehen.(15).

EP 0 315 723 A1

## Gegossene Vorschweiss- und Losflansche, aus Stahl sowie Aluminium, mit Aufhängeösen, Anschweisslanschen und Aussparungen für Vorschweissbordscheiben, in neuer Form.

Die im folgenden beschriebenen Neuerungen können bei Rohrleitungen und Anflanschungen an Tanks, Kessel, Anlagen etc angewandt werden. Die Rohrleitungen sind aus Metall (Stahl, Aluminium, Buntmetallen) oder Kunststoffen und dienen zum Transport von flüssigen, pulverigen oder körnigen Stoffen.

Die Erfindung beruht auf der Idee der gegossenen Flansche, welche als Neuerung das Angiessen von Aufhängeösen, samt Anschweisslaschen, der Aussparung für Vorschweissbordscheiben resp. -Bunde, dem Weglassen von Material an nichttragenden Partien und der wahlweisen Anwendung von Durchgangsresp. Gewindelöchern erlaubt.

Bisher wurden solche Flansche entweder geschmiedet, aus Blechen herausgeschnitten oder aus dem Vollen gearbeitet. Bei den Aluminium Flanschen sind seit etlichen Jahren in der Kokille gegossene Ausführungen auf dem Markt, jedoch nur in einfacher Ausführung. Hängende oder sonst getragene Rohre müssen mit Rohrschellen, welche die Rohrleitung umfassen, und Laschen fixiert werden.

Ausserdem liegen die Vorschweissbordscheiben und -Bunde flach auf dem Flansch auf, bilden dadurch einen gewissen Abstand von Flansch zu Flansch, welches als Ursache einer Durchbiegung der Flansche bei unsachgemässer Montage anzunehmen ist.

Die Vorschweissflansche werden an das Rohrende angeschweisst und mit einer Dichtung montiert, wobei ein fugenloser Übergang zwischen Flanschen nicht immer gegeben ist.

Sämtliche Flansche sind bisher mit Durchgangslöchern versehen und werden mittels Schrauben und Muttern verbunden.

Demgegenüber stehen die folgenden Neuerungen:

A. Aluminium-Flansche:

- Aufhängeösen angegossen
- Aussparungen für Vorschweissbördel + -Bunde angegossen
- Aussparungen zwischen den Verbindungslöchern, durch Verrippungen verstärkt.
- Reduzierte Aussenkontur.

B. Losflansche aus Stahl:

- Aufhängeösen angegossen, die obere Anschlusskante ist als Schweisskante zum Anschweissen einer Lasche geformt
- Aussparungen für Vorschweissbordscheiben und -Bunde eingegossen.
- Aussparungen zwischen den Verbindungslöchern, durch Verrippungen verstärkt.
- Reduzierte Aussenkonturen
- Abwechselnde Durchgangs- und Gewindelöcher

C. Vorschweissflansche aus Stahl:

- Aufhängeösen angegossen, die obere Anschlusskante ist als Schweisskante zum Anschweissen einer Lasche geformt
- Aussparungen zwischen den Verbindungslöchern, durch Verrippungen verstärkt.
- Reduzierte Aussenkonturen
- Feinstgedrehte Dichtungsfläche, mit PFTE beschichtet.

Die unter A.B.C. aufgeführten Neuerungen bringen folgende Vorteile:

A. Bei den Alu-Flanschen entfällt eine Rohrschelle, welche ev. als Rohraufhängung benötigt wird

- Der Flansch wird dank den Aussparungen leichter
- Durch die auf die Flanschoberfläche abgesenkte Vorschweissbordscheibe wird der Abstand von Flansch zu Flansch reduziert und die Gefahr einer Durchbiegung bei einer unsachgemässen Montage ist eliminiert. Zudem werden die Bordscheiben am Aussendurchmesser zentriert und damit der Übergang von Rohr zu Rohr genauer
- Durch die Aussparungen an der Aussenkontur wird das Bauvolumen kleiner, die Flansch können näher zusammen gelegt werden.

B. Bei den Losflansche aus Stahl für Metall- und Kunststoffrohre sind die Vorteile gleich:

- die Flansche werden leichter
- Bei fixierten Rohrleitungen wird eine Rohrschelle eingespart
- Die Vorschweissbordscheibe ist auf die Flanschoberfläche abgesenkt, resp. bei Kunststoffrohren und deren Bunden vertieft. Die beiden Flansche kommen näher zusammen, die Durchbiegungsgefahr ist behoben resp. reduziert. Auch hier ergibt sich durch die Zentrierung am Aussenrand von Bordscheibe resp. Bund eine präzisere Ausrichtung der Rohre.
- Die reduzierte Aussenkontur gewährt ebenfalls eine Einsparung an Platzbedarf.

- Bei abwechselnden Durchgangs- und Gewindelöchern entfallen die Muttern und die Schrauben werden nochmals kürzer.

C.- Bezüglich Gewichtsreduktion, Platzeinsparung, Aufhängeösen, Anschweisslasche, sowie vereinfachter Schraubverbindung entsprechen die Vorschweissflansche den unter B. aufgeführten Neuerungen und Einsparungen.

- Zusätzlich kommt der bei einer feinstgedrehten Dichtungsfläche auf null reduzierte Abstand zwischen den Flanschen. Damit wird der Übergang fugenlos.
- Als Nebenerscheinung ist zu erwähnen, dass die PFTE Beschichtung noch bei hohen Temperaturen beständig ist.

Über Die Herstellungsarten lässt sich sagen:
Die Aluminium-Flansche werden in der Kokille gegossen. Als mögliche Nacharbeit sei das Ausdrehen der Aussparung für die Vorschweissbordscheibe + -Bund erwähnt.

Die Stahlflansche werden im Wachsausschmelzverfahren (Fein-Guss) hergestellt. Die bei diesem Verfahren erzielte Strukur lässt ein Schweissen ohne weiteres zu und gewährt hohe Festigkeiten. Bei den Losflanschen ist ein Ausdrehen der Aussparung vor Vorschweissbordscheiben + -Bunde auf den nötigen Durchmesser ev. nötig, um die Gusstoleranzen auszugleichen.

Die Gewinde werden nach Bedarf geschnitten (alle, keine, jedes 2. Loch). In Allen Fällen dient die Aufhängeösen als Anguss und gestattet somit eine rationelle Fertigung. <u>Sämtlichen Flansche entsrechen bezüglich den Abmessungen den international gültigen Normen und Vorschriften.</u>

**Ansprüche**

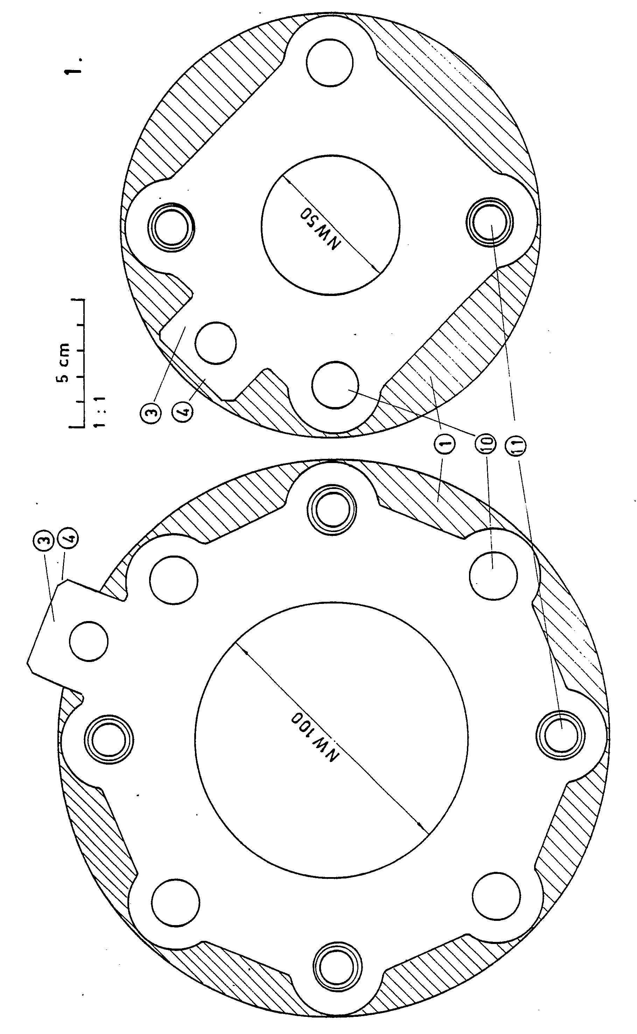

1. Aussparung an der Aussenkontur der gegossenen Metallflansche für Rohrverbindungen und Anflanschungen (1). Auf Zeichnung 1 stellt die schraffierte Fläche den bisherigen Stand, die blanke Fläche die Neuerung dar.

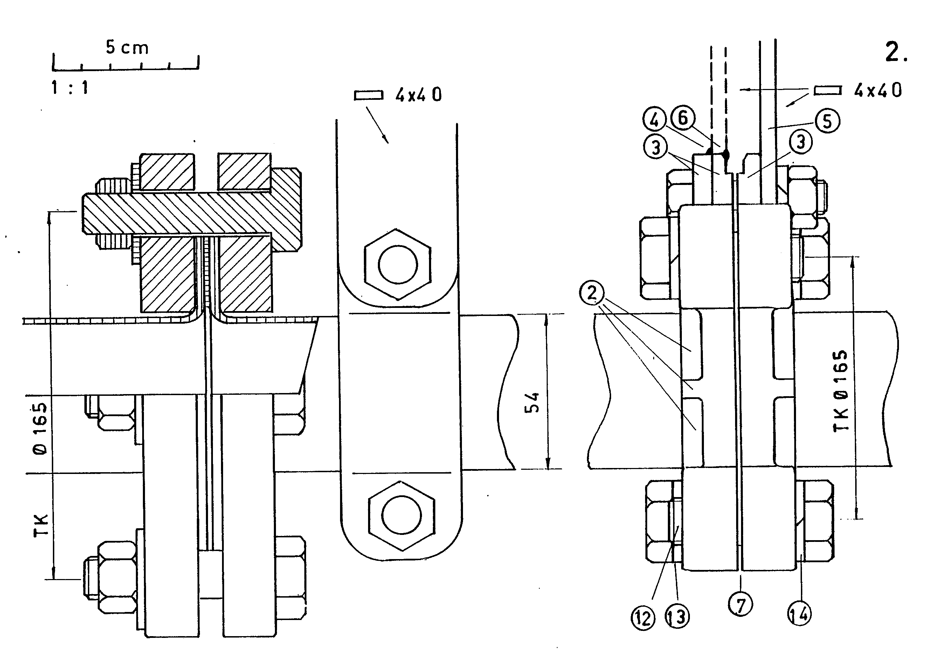

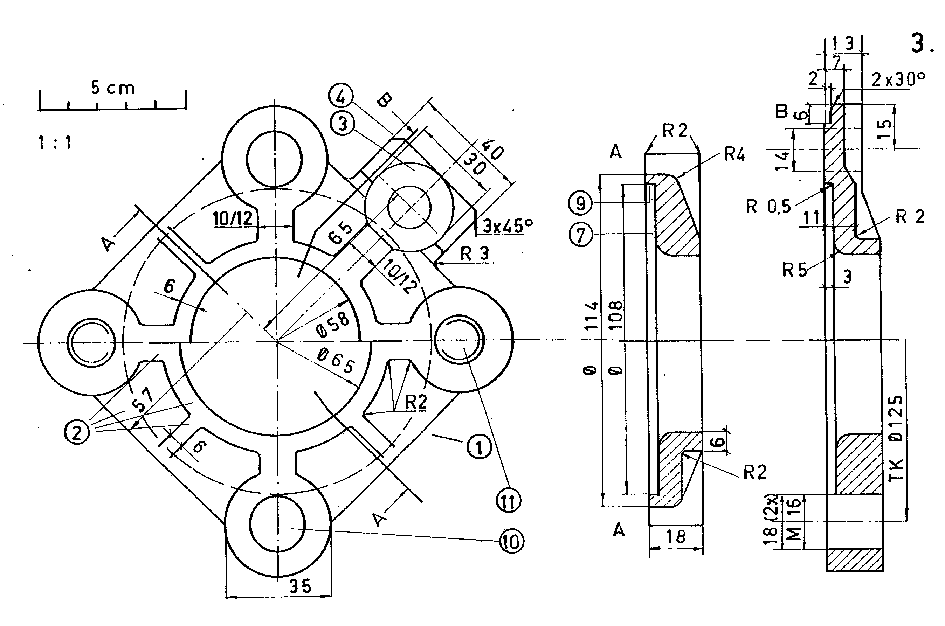

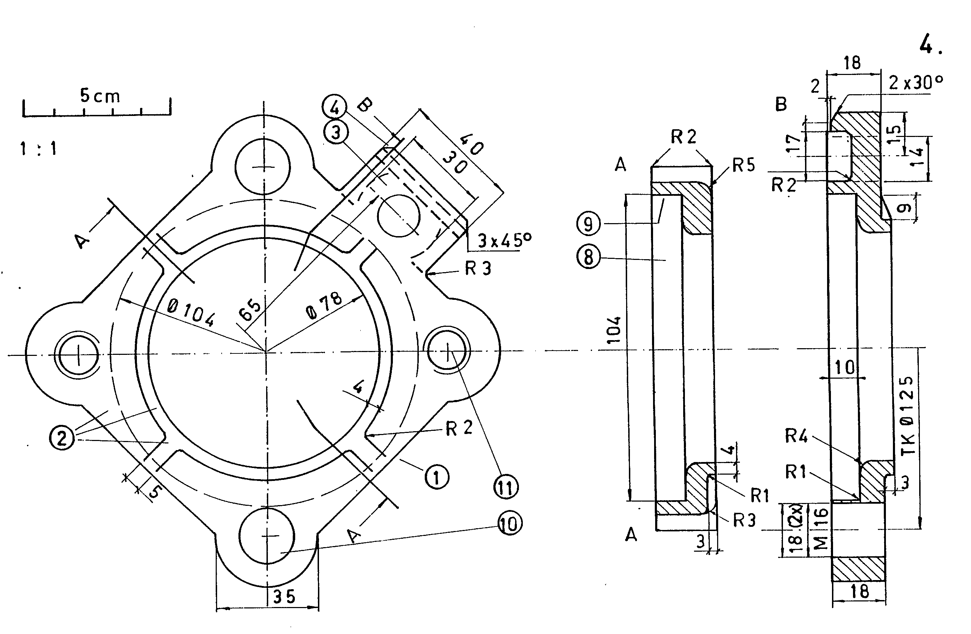

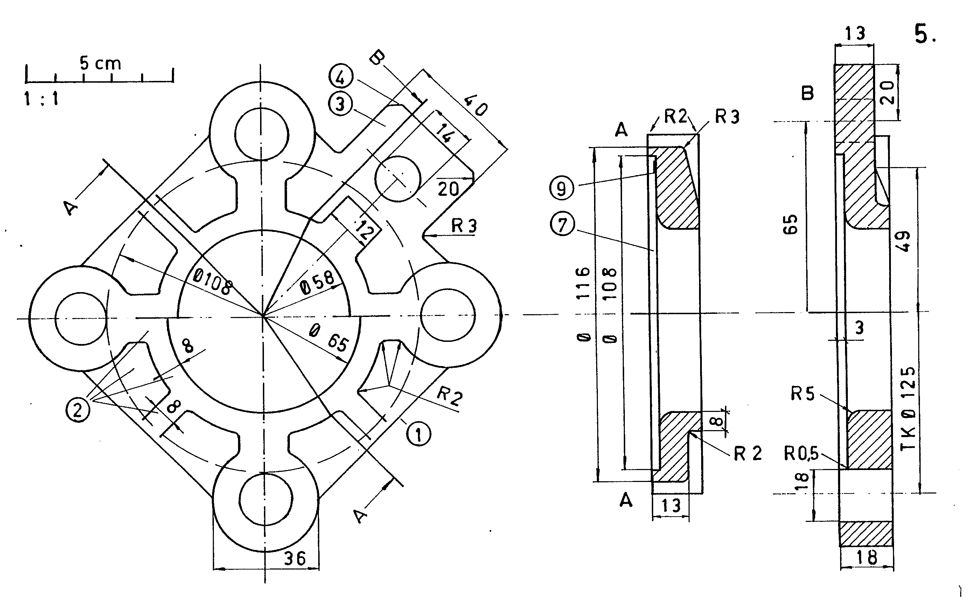

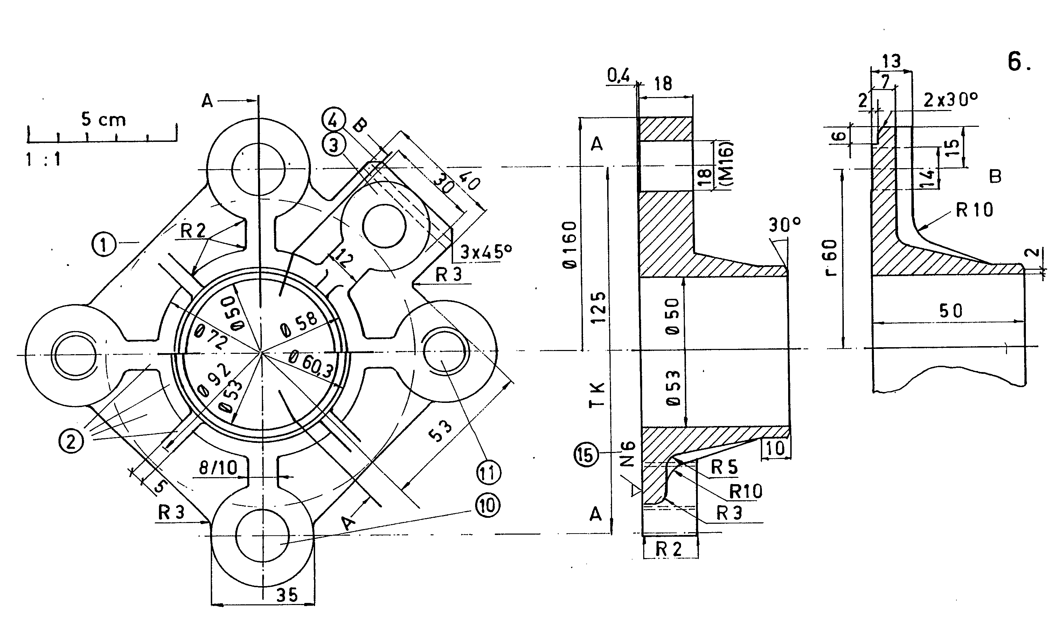

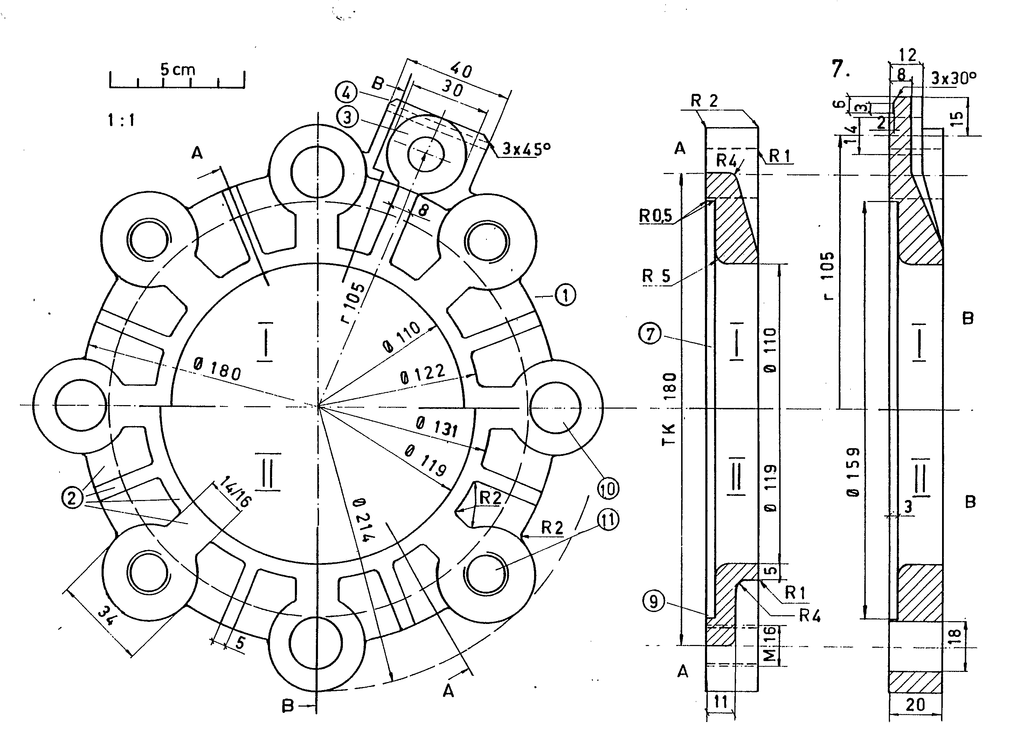

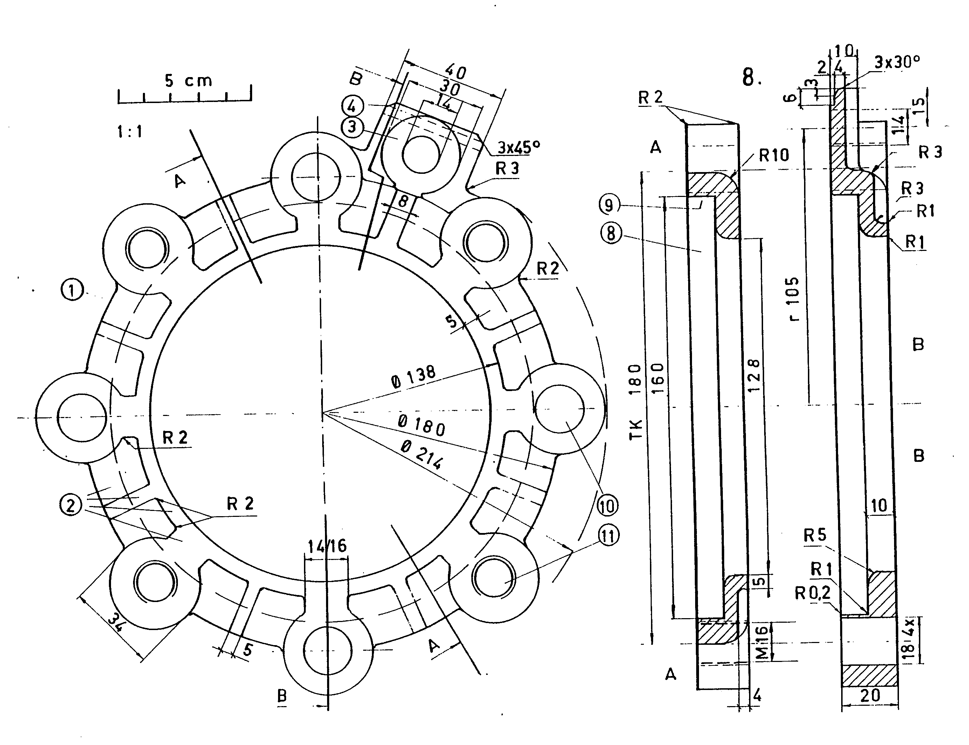

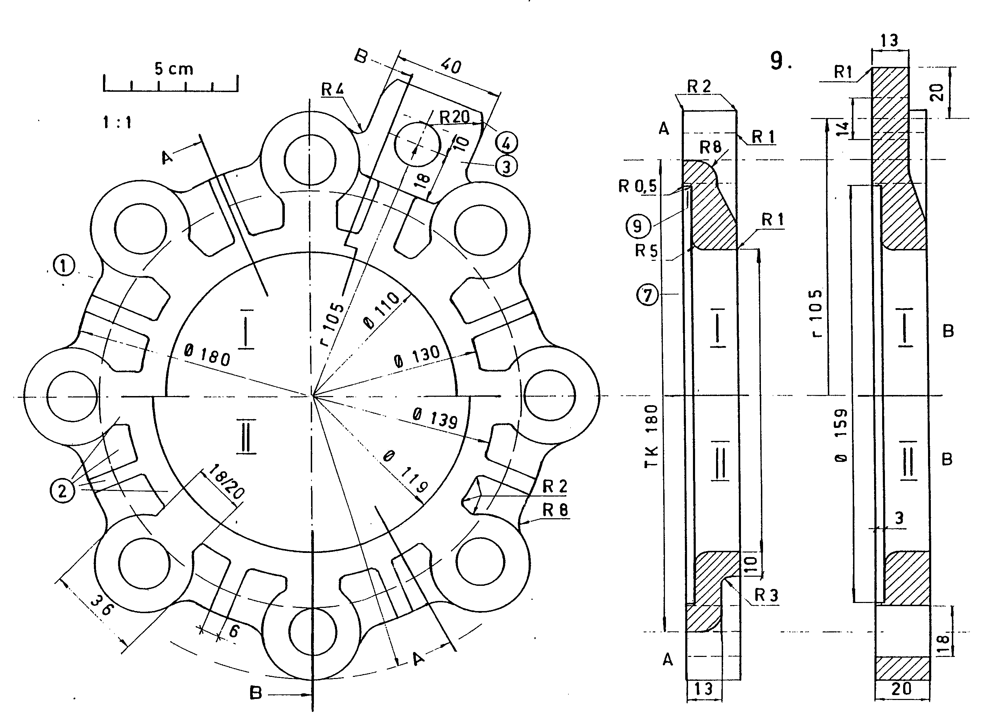

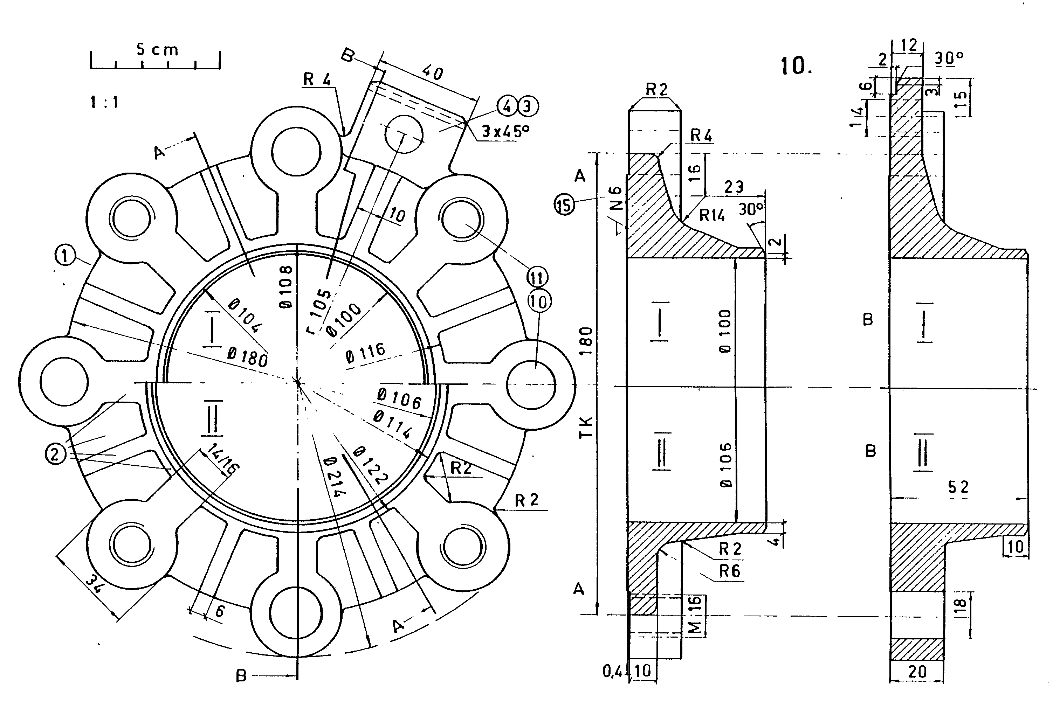

2. Gewichtsreduktionen bei den gegossenen Metallflanschen durch Aussparungen und Verrippungen bei den Ouerschnitten. Die Zeichnungen 2-10 geben einen Überblick über die neue Formgebung (2).

3. Angegossene Aufhängeösen (3) mit als Schweisskante ausgebildetem oberem Anschluss (4). Damit kann wahlweise eine Lasche, welche eine Rohrschelle ersetzt, angeschraubt (5) oder direkt angeschweisst (6) werden. Sind diese Aufhängeösen nicht erwünscht, so können sie bei der Montage in eine nicht störende Richtung gedreht werden. Sichtbar sind diese Ösen und Laschen auf allen Zeichnungen.

4. Eingegossene Aussparung für Vorschweissbordscheiben (7) resp. -Bunde (8). Damit lassen sich die Flansche so nahe zusammenbringen, dass ein Durchbiegen bei unsachgemässer Montage unmöglich resp. erschwert ist. Zusätzlich sind die Vorschweissbördel resp. -Bunde am Aussendurchmesser geführt und zentrieren die Verbindung (9). Die Zeichnungen 2-5 und 7-9 zeigen diese Aussparungen.

5. Abwechselnde Durchgangs- (10) und Gewindelöcher (11) ersparen die Muttern (12) und verkürzen die Schrauben (13). Die Schrauben werden direkt und abwechselnd von links und rechts im Flansch eingeschraubt (13). Diese Verbindung ist mit Federringen (14) gegen ein Loslösen bei Vibrationen zu sichern. Bei Aluminium-Flanschen entfällt dieser Anspruch, da eine Ausreissgefahr der Gewinde besteht. Diese Art von Montage ist auf den Zeichnungen 1,2 rechts, 3,4,6,7,8,10 sichtbar.

6. Die Diamantgedrehte und mit PFTE beschichtete Dichtfläche (15) bei den Vorschweissflanschen reduziert den Abstand von Flansch zu Flansch auf null und ergibt einen fugenpräzise Rohrverbindung.

4.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 403 333 (GENERAL MOTORS) <br> * Figuren 1,2 * <br> --- | 1,2 | F 16 L 23/02 |
| A | DE-B-1 600 403 (BERGHÖFER) <br> * Figuren 1,2 * <br> --- | 2,4 | |
| A | US-A-3 455 583 (RAY) <br> * Figuren 1,2 * <br> ----- | 5 | |

RECHERCHIERTE SACHGEBIETE (Int. Cl.4)

F 16 L 23/00

**Der vorliegende Recherchenbericht wurde für alle Patentansprüche erstellt**

| Recherchenort | Abschlußdatum der Recherche | Prüfer |
|---|---|---|
| BERLIN | 14-06-1988 | SCHLABBACH M |